# EUROPEAN PATENT SPECIFICATION

(11) **EP 3 814 097 B1**
(45) Date of publication and mention of the grant of the patent: **04.05.2022**
(21) Application number: 19742927.7
(22) Date of filing: 18.06.2019
(51) Int. Cl.: B29C 51/00, A43D 25/07, B29D 35/12, B29D 35/14, B29C 51/20, B29C 51/26, B29C 51/28, B29C 51/42, A43B 1/02, A43B 1/04, A43D 3/02, A43D 95/10, B29L 31/50

(54) **APPARATUS FOR THREE-DIMENSIONAL THERMO-FORMING AND / OR UNION THROUGH THERMO-ADHESIVATION OF FLEXIBLE SEMI-FINISHED PRODUCTS**
VORRICHTUNG ZUR DREIDIMENSIONALEN THERMOFORMUNG UND / ODER VERBINDUNG DURCH THERMOADHESIVIERUNG FLEXIBLER HALBFERTIGER PRODUKTE
APPAREIL DE THERMO-FORMAGE ET / OU D'UNION TRIDIMENSIONNELS PAR THERMO-ADHESIVATION DE PRODUITS FLEXIBLES SEMI-FINIS

(30) Priority: 26.06.2018 IT 201800006687
(43) Date of publication of application: 05.05.2021
(73) Proprietor: MACPI S.p.A. PRESSING DIVISION, 25036 Palazzolo Sull'Oglio (Brescia) (IT)
(72) Inventor: CARTABBIA, Giovanni, 25036 Palazzolo sull'Oglio (BS) (IT); CARTABBIA, Paolo, 25036 Palazzolo sull'Oglio (BS) (IT)
(74) Representative: PGA S.p.A.
(86) International application number: PCT/IB2019/055088
(87) International publication number: WO 2020/003052

(56) References cited:
- EP-A1- 0 512 526
- EP-A2- 1 293 330
- WO-A1-2017/191454
- JP-A- S55 118 702
- US-A1- 2017 129 200
- US-B1- 6 705 853

## Description

### Field of the finding

The object of the present invention is an apparatus for the three-dimensional thermo-forming and/or the thermo-adhesive bonding of flexible semi-finished products for the purpose of manufacturing stable three-dimensional articles, possibly with differentiated structure, possibly complete with additional functional and/or decorative parts.

### Definitions

In the present description and in the enclosed claims, with the term "flexible semi-finished product" it is intended a semi-finished product formed by threads and/or fibers of woven or non-woven type. By way of a non-limiting example, the semi-finished product is a cloth, a bag, a sock formed by woven threads or by non-woven threads/fibers. A non-woven fabric is a product similar to a fabric but obtained with methods different from weaving.

Among the constituent materials, the threads and/or the fibers can by way of a non-limiting example include natural or synthetic threads, reinforcement fibers (such as Kevlar^{®} or carbon yarns).

Among the articles that can be manufactured, by way of a non-limiting example the following can be included: clothing articles or parts thereof (e.g. reinforcement elements for jackets, pants, etc.) also technical/sports, medical articles (containing or orthopedic braces), accessories (bags, backpacks, trolley cases, suitcases, etc.), covers of various type, for example for furnishing or for vehicles, footwear of various type (sports, orthopedic).

In the present description and in the enclosed claims, with the term "thermoplastic or thermo-adhesive yarn" it is intended a yarn comprising thermoplastic polymers, i.e. polymers formed by linear or little-branched chains, not bonded to each other. Hence it is sufficient to increase the temperature in order to bring them to a viscous state and thus be able to form them. The thermoplastic or thermo-adhesive yarns have the ability of modifying the structure thereof at a specific temperature (usually comprised between 60°C and 180°C), and hence of melting once such temperature is reached and of crosslinking once cooled.

### Background of the finding

In such context, it is known to manufacture footwear with textile portions provided with fusible filaments or fibers. The documents EP1571938 and US 2017/129200 illustrate several examples thereof. EP 1 293 330 A2 discloses a thermoforming apparatus having a cooling quench that facilitates a rapid cooling and shortens the cycle time.

### Summary

In such context, the Applicant has set the objective of proposing an apparatus for manufacturing articles by means of thermo-forming and/or thermo-adhesive bonding of flexible semi-finished products provided with thermoplastic or thermo-adhesive yarns.

In particular, the Applicant has set the objective of proposing an apparatus which allows producing quality articles by means of thermo-forming and/or thermo-adhesive bonding.

The Applicant has also set the objective of proposing an apparatus for thermo-forming and/or thermo-adhesive bonding that is relatively compact, structurally simple and reliable.

The Applicant has also set the objective of proposing a semi-automatic apparatus for thermo-forming and/or thermo-adhesive bonding which allows a single operator to follow the entire process of thermo-forming and/or thermo-adhesive bonding in a simple, quick and safe manner.

The Applicant has found that the abovementioned objects and still others can be substantially attained by an apparatus and by a process for thermo-forming and/or thermo-adhesive bonding configured for shaping, heating and subsequently uniformly cooling flexible semi-finished products provided with the abovementioned thermoplastic or thermo-adhesive yarns, in a manner so as to determine the at least partial melting and the subsequent crosslinking of the thermoplastic polymers of said thermoplastic or thermo-adhesive yarns and therefore the formation of stable three-dimensional articles.

In particular, the Applicant has found that the abovementioned objects and still others can be substantially attained by an apparatus and by a process for the three-dimensional thermo-forming and/or the thermo-adhesive bonding of flexible semi-finished products according to one or more of the enclosed claims and/or according to one or more of the following aspects.

According to claim 1, the present invention regards an apparatus for the three-dimensional thermo-forming and/or the thermo-adhesive bonding of flexible semi-finished products.

According to an independent aspect, the present invention regards a process for the three-dimensional thermo-forming and/or the thermo-adhesive bonding of flexible semi-finished products, preferably actuated by the apparatus according to the preceding aspect and/or according to one or more of the following aspects.

The process comprises:
▪ preparing at least one flexible semi-finished product comprising thermoplastic yarns;
▪ arranging the flexible semi-finished product on a reference shape of an article to be manufactured;
▪ arranging, in a loading station, the reference shape with the flexible semi-finished product on a support head of a conveyor;
▪ moving the conveyor up to arranging the reference shape with the flexible semi-finished product in an oven while the reference shape with the flexible semi-finished product is supported by the support head;
▪ heating the flexible semi-finished product in the oven up to determining the at least partial melting of thermoplastic material of the thermoplastic yarns of said flexible semi-finished product;
▪ moving the conveyor in order to extract the reference shape with the flexible semi-finished product from the oven and in order to arrange the reference shape with the flexible semi-finished product in a refrigerator while the reference shape with the flexible semi-finished product is supported by the support head;
▪ cooling the flexible semi-finished product in the refrigerator up to determining the crosslinking of the thermoplastic material and the at least partial formation of the article, preferably with portions that are stiffer and others that are less stiff;
▪ moving the conveyor in order to extract the reference shape with the flexible semi-finished product from the refrigerator and bring it into an unloading station, preferably coinciding with the loading station;
▪ separating the article from the reference shape.

The Applicant has verified that the apparatus and the process according to the invention allow producing quality articles by means of thermo-forming and/or thermo-adhesive bonding by means of an apparatus that is relatively simple, compact and safe for the operator who must manage it.

In particular, the Applicant has verified that the apparatus according to the invention allows manufacturing the articles starting from flexible semi-finished products in a relatively quick, simple and inexpensive manner.

The Applicant has also verified that the apparatus and the process according to the present invention allow conferring the desired structural characteristics to the article, for example with consistency and/or stiffness differentiated at the various points of the article itself.

The final result is a product with the three-dimensional shape of the core/reference shape, preferably provided with a differentiated structure in terms of stiffness/softness in accordance to the distribution of the thermoplastic yarns. Further preferred aspects of the present invention are listed hereinbelow. Preferably, the flexible semi-finished product comprises, in addition to the thermoplastic yarns, synthetic and/or natural yarns.

Preferably, the flexible semi-finished product is a cloth, a sock, an open or closed tubular body, a bag.

Preferably, the flexible semi-finished product is impermeable to liquids (e.g. to water) and/or to gases.

Preferably, the flexible semi-finished product is breathable.

Preferably, the flexible semi-finished product is made by means of weaving.

Preferably, the thermoplastic yarns are arranged in different ways and with different densities during weaving.

Preferably, the thermoplastic yarns are thermo-fusible and/or heat-shrinking.

The Applicant has verified that the arrangement and/or the characteristics of the thermoplastic yarns allow obtaining consistency and/or stiffness differentiated at different areas/portions/points of the produced article.

In one aspect, the conveyor is a carousel rotatable around a main axis, preferably vertical.

In one aspect, the loading/unloading station, or the loading station and the unloading station, said at least one oven and the refrigerator are arranged around the main axis.

In one aspect, the carousel comprises a plurality of support heads arranged around the main axis, preferably three or four support heads.

In one aspect, the conveyor is movable by steps.

In one aspect, after each step, said at least one support head is situated at the loading/unloading station or at said at least one oven or at the refrigerator.

In one aspect, after each step, one of the support heads is situated at the loading and/or unloading station, one of the support heads is situated at said at least one oven, one of the support heads is situated at the refrigerator.

In one aspect, the support head comprises constraint devices configured for hanging said at least one reference shape on the support head.

In one aspect, the support head comprises a plurality of constraint devices configured for hanging a plurality of reference shapes on the support head, preferably the support head or each support head comprises two or four constraint devices.

In one aspect, once hung on the support head, the reference shape or shapes hang below the support head.

In one aspect, the support head is placed above said at least one oven and/or the refrigerator.

In one aspect, the constraint devices comprise a hook, preferably protruding downwards. The hook is configured for directly supporting a reference shape which is hung thereon.

In one aspect, the constraint devices are configured for retaining a flap of a heat-resistant bag (i.e. the bag resists the temperatures to which it is subjected in the oven without being broken or deformed) containing the reference shape and hanging below the support head.

In one aspect, the constraint devices comprise a plate provided with a through opening and a presser operating on said through opening.

In one aspect, the presser is movable between a release position, in which the presser is spaced from the through opening, and a retention position, in which the presser abuts against an edge of the through opening.

In one aspect, the support head comprises an actuator operatively connected to the presser in order to move it between the release position and the retention position.

In one aspect, the through opening and the presser are configured for constraining the bag between the presser and an edge of the through opening, wherein the bag protrudes from the through opening downwards.

In one aspect, the through opening and the presser are configured for constraining the hook so that it protrudes from the through opening downwards.

In one aspect, the constraint devices comprise a disc integral with the hook and placeable between the through opening and the presser.

In one aspect, the constraint devices are rotatably mounted on the support head.

In one aspect, the support head comprises a motor connected to the constraint devices in order to rotate them around a respective auxiliary axis, preferably vertical. In this manner, the reference shape can be rotated around the auxiliary axis.

In one aspect, the support head comprises a transmission connected to the motor and to the plurality of constraint devices, in order to rotate each of them around a respective auxiliary axis.

In one aspect, the constraint devices comprise a sleeve delimiting the through opening and rotatably coupled to the plate.

In one aspect, the presser is rotatably coupled to the respective actuator.

In one aspect, the motor is connected to the sleeve in order to rotate it.

In one aspect, the flexible semi-finished product and the reference shape are rotated in said at least one oven during the heating and/or in the refrigerator during the cooling. The rotation allows making the temperature uniform on the flexible semi-finished product.

In one aspect, the support head comprises a conduit in fluid connection with a reduced pressure device.

In one aspect, the reduced pressure device is outside the apparatus or is part of the apparatus.

In one aspect, a mouth of the conduit is arranged at each of the constraint devices in order to be placed in the bag when said bag is constrained to the constraint devices.

In one aspect, the mouth of the conduit opens on the presser.

In one aspect, the presser is mounted for rotating around the mouth of the conduit. In one aspect, the support head is movable between a raised position and a lowered position, preferably along a vertical direction.

In one aspect, the conveyor comprises a main actuator for the support head or for each support head, in order to move it between the raised position and the lowered position.

In one aspect, in the raised position, the support head is spaced from said at least one oven or from the refrigerator in order to maintain said at least one reference shape outside the heating chamber or the cooling chamber.

In one aspect, in the lowered position, the support head is close to said at least one oven or to the refrigerator in order to maintain said at least one reference shape inside the heating chamber or the cooling chamber.

In one aspect, said at least one oven and/or the refrigerator each have at least one upper opening for allowing the entry of the reference shape inside the heating chamber or the cooling chamber when the support head is brought into the lowered position.

In one aspect, the support head, preferably the plate of the support head, when it is situated in the lowered position, sealingly closes said upper opening.

In one aspect, said at least one oven and/or the refrigerator each comprise a shutter configured for closing said upper opening, preferably when the support head is situated in the raised position.

In one aspect, said at least one oven comprises an external casing and an internal casing delimiting an interspace between them, wherein the internal casing delimits a containment volume and has passage holes communicating with the interspace. The internal casing is configured for receiving the flexible semi-finished product on the reference shape hung on the support head.

In one aspect, the heaters of said at least one oven comprise electrical heating elements preferably placed in the interspace.

In one aspect, the heaters of said at least one oven comprise a fan for determining the circulation of a fluid, preferably air and/or overheated steam, heated by the electrical heating elements. The fan is operatively active between the containment volume and the interspace for determining the circulation of the heated fluid between the containment volume and the interspace. Preferably, the fan is configured for suctioning the fluid through a main mouth of said fan facing the containment volume and for blowing it into the interspace and on the heating elements, and from here once again into the containment volume through the passage holes.

In one aspect, the heaters of said at least one oven comprise an infrared ray emitter.

In one aspect, the heaters of said at least one oven comprise a steam generator, preferably a generator of overheated steam. In one aspect, a steam generator is connected to nozzles that are operatively active in the containment volume and/or in the interspace in order to introduce the steam in said oven.

In one aspect, the heated fluid comprises: overheated air, steam, preferably overheated, or a mixture of overheated air and steam, preferably overheated. Preferably, a temperature of the overheated steam is comprised between 150 °C and 200 °C.

In one aspect, heating the flexible semi-finished product in the oven comprises: irradiating the flexible semi-finished product with infrared rays.

In one aspect, heating the flexible semi-finished product in the oven comprises: irradiating the flexible semi-finished product with infrared rays and circulating overheated air in the oven.

In one aspect, said at least one oven comprises a first oven and a second oven arranged one after the other along a path of the conveyor.

In one aspect, the apparatus comprises a loading and unloading station, a first oven, a second oven, a refrigerator arranged around the main axis and preferably angularly equidistant.

In one aspect, the heaters of the first oven comprise an infrared ray emitter. Preferably, the first oven comprises the electrical heating elements, the fan and the infrared ray emitter.

In one aspect, provision is made for pre-heating the flexible semi-finished product in the first oven, preferably bringing it to a temperature comprised between 90°C and 280°C, preferably for a time comprised between 10 s and 90 s.

In one aspect, the heaters of the second oven comprise a steam generator. Preferably, the second oven comprises the electrical heating elements, the fan and the steam generator.

In one aspect, provision is made for heating the flexible semi-finished product in the second oven, preferably bringing it to a temperature comprised between 90°C and 280°C, preferably for a time comprised between 10 s and 90 s.

In one aspect, in the second oven, the percentage of overheated air in the mixture of overheated air and steam is comprised between 10% and 70%.

The Applicant has verified that the qualitatively improved results and the shortest time cycle are attainable by means of the pre-heating in the first oven and the subsequent heating in the second oven. The air-steam mixture in the second oven in fact allows maximizing the heat exchange with the flexible semi-finished product, making the temperature uniform on the flexible semi-finished product in an optimized manner and preventing condensate problems in the oven.

In one aspect, the first and the second oven are substantially identical to each other.

In one aspect, the heaters both of the first and of the second oven comprise a steam generator or nozzles connected to a steam generator. Preferably, both the first oven and the second oven comprise the electrical heating elements, the fan and the nozzles connected to the steam generator.

The Applicant has verified that results that are even more qualitatively improved and the shortest time cycle are attainable by means of the pre-heating in the first oven and the subsequent heating in the second oven, wherein overheated steam is used in both ovens.

In one aspect, the apparatus comprises a superheater operatively interposed between the steam generator and said at least one oven. The superheater is configured for generating the overheated steam.

In one aspect, the superheater is connected to the steam generator and to the nozzles situated in said at least one oven.

In one aspect, the superheater comprises a container, optionally shaped as a barrel or placed vertically.

In one aspect, the container has a main inlet in fluid communication with the steam generator, a main outlet in fluid communication with said at least one oven and a recirculation circuit arranged at least partly in the container.

In one aspect, the recirculation circuit comprises a heat exchange portion housed in the container, wherein the heat exchange portion is connected to a mouth for drawing steam from the container and to the main outlet.

In one aspect, the heat exchange portion is a coil.

In one aspect, the drawing mouth is placed on an upper portion of the container.

In one aspect, a recirculation conduit, optionally provided with a valve, connects the drawing mouth to the heat exchange portion.

In one aspect, the superheater comprises a discharge for condensate that draws from a bottom portion of the container.

In one aspect, said at least one oven comprises pipes provided with nozzles and connected to the steam generator.

In one aspect, at least one portion of said pipes defines a heat exchanger, optionally defined by a coil, configured for heating the steam present in the pipes by means of heat present in the heating chamber.

In one aspect, the steam entering into the superheater has a temperature comprised between 100°C and 110°C.

In one aspect, the steam entering into the superheater has a specific pressure comprised between 1 bar and 6 bar.

In one aspect, the overheated steam exiting from the superheater has a temperature comprised between 140 °C and 180 °C.

In one aspect, the overheated steam exiting from the superheater and entering into the oven has a pressure comprised between 1 bar and 5 bar.

In one aspect, the refrigerator comprises an external casing and an internal casing delimiting an interspace between them, wherein the internal casing delimits a containment volume and has passage holes communicating with the interspace. The internal casing is configured for receiving the flexible semi-finished product on the reference shape hung on the support head.

In one aspect, the refrigerator comprises a cool radiator inserted in the external casing or in the internal casing.

In one aspect, the refrigerator comprises a fan for determining the circulation of a fluid, preferably air, cooled by the cool radiator. The fan is operatively active between the containment volume and the interspace for determining the circulation of the cooled fluid between the containment volume and the interspace. Preferably, the fan is configured for suctioning the fluid through a main mouth of said fan facing the containment volume and for blowing it into the interspace and from here once again into the containment volume through the passage holes.

In one aspect, provision is made for arranging accessory elements on the reference shape and/or on the flexible semi-finished product.

In one aspect, the accessory elements comprise: one or more reinforcements and/or one or more impermeable membranes and/or one or more decorative elements.

In one aspect, before hanging the bag on the support head, provision is made for inserting the reference shape with the flexible semi-finished product and, preferably, with the accessory elements in the heat-resistant bag.

In one aspect, provision is made for placing the heat-resistant bag under vacuum, reducing the internal pressure thereof below the atmospheric pressure by means of the reduced pressure device.

The heat-resistant bag under vacuum allows compressing all the elements on the reference shape and holding them in position during the heating and cooling.

In one aspect, reduced pressure in the bag is comprised between -10 and -80 kPa.

In one aspect, a pressure on the flexible semi-finished product is comprised between 100 and 800 g/cm².

In one aspect, in the loading/unloading station or in the unloading station, the reference shape with the flexible crosslinked semi-finished product is extracted from the heat-resistant bag after the cooling and the crosslinking of the thermoplastic material. The extraction therefore occurs when the assembly has been stabilized.

Further characteristics and advantages will be more evident from the detailed description of preferred but not exclusive embodiments of an apparatus and of a process for the three-dimensional thermo-forming and/or the thermo-adhesive bonding of flexible semi-finished products in accordance with the present invention.

### Description of the drawings

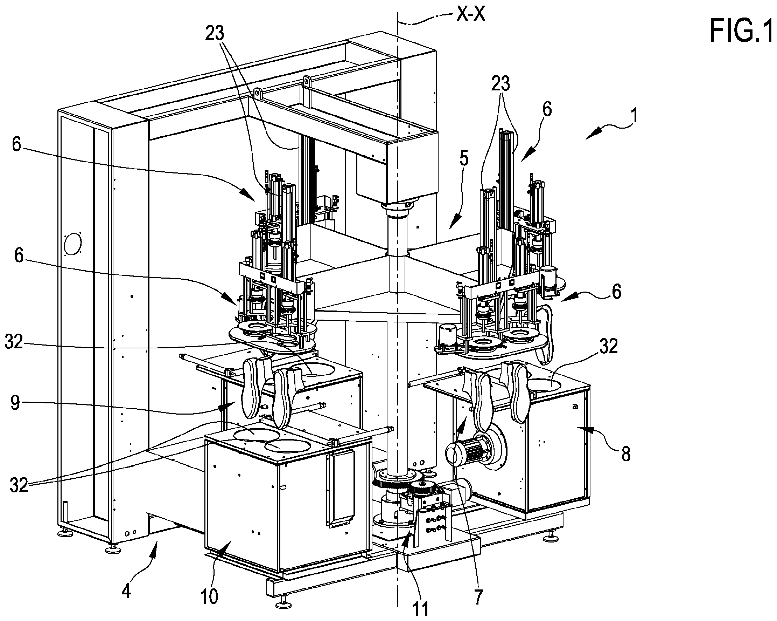

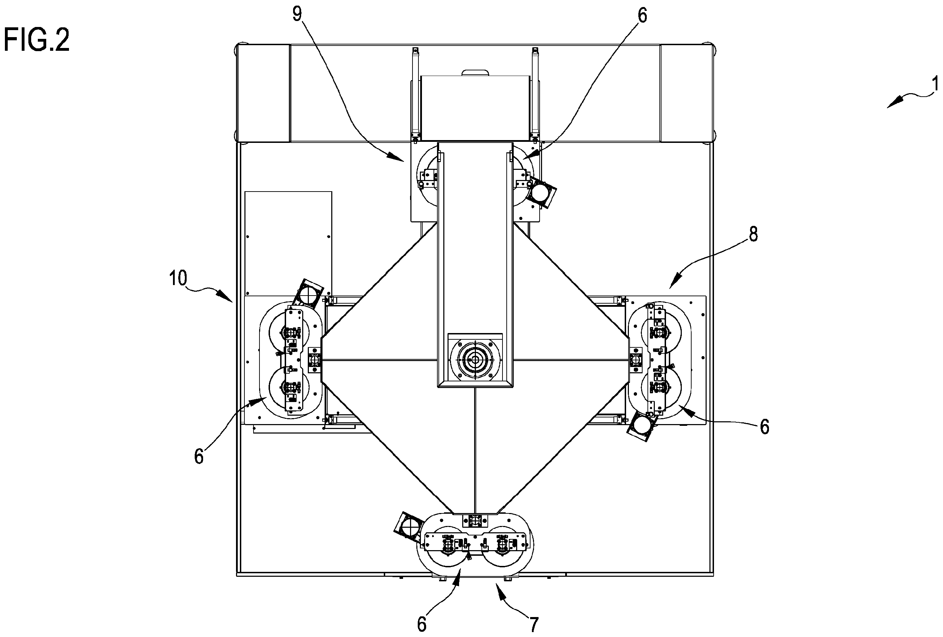

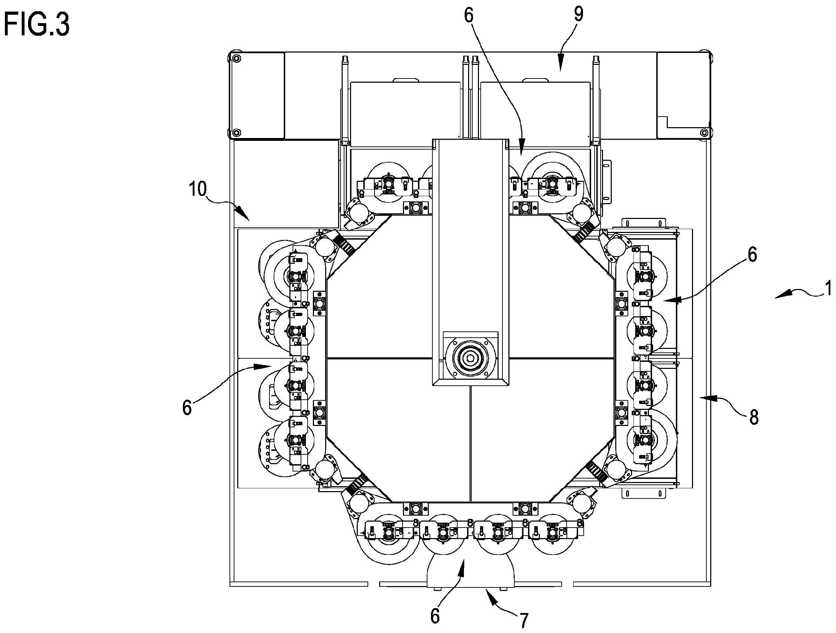

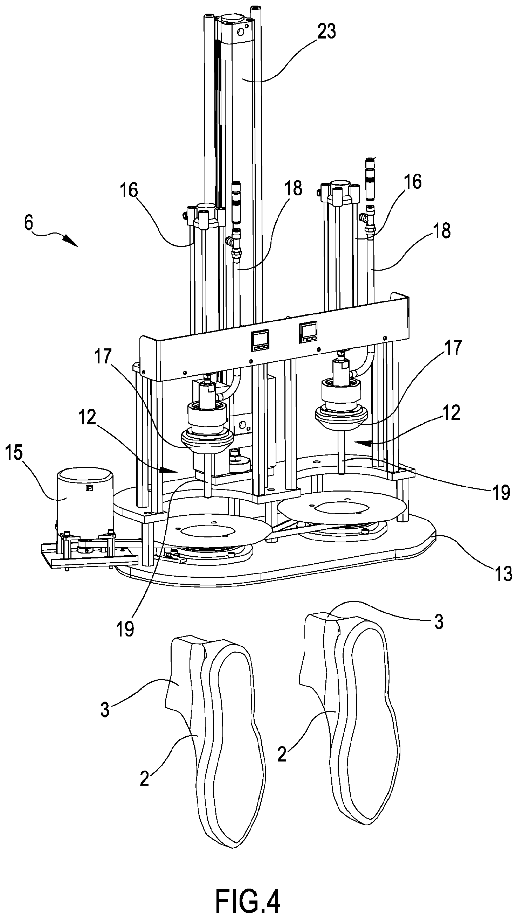

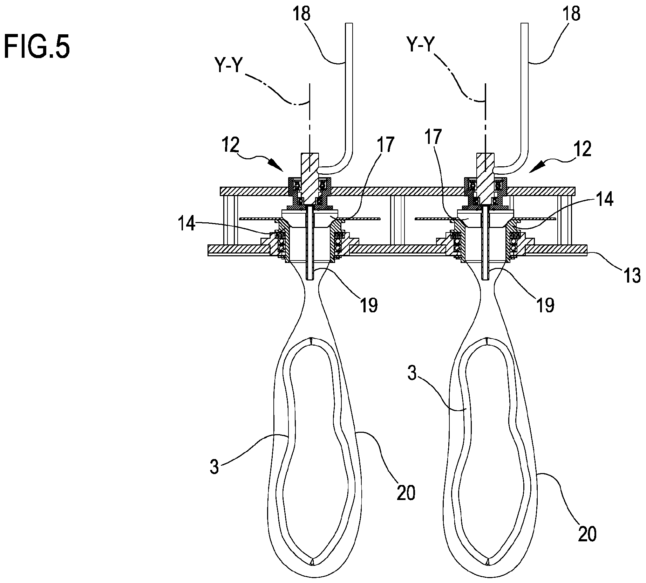

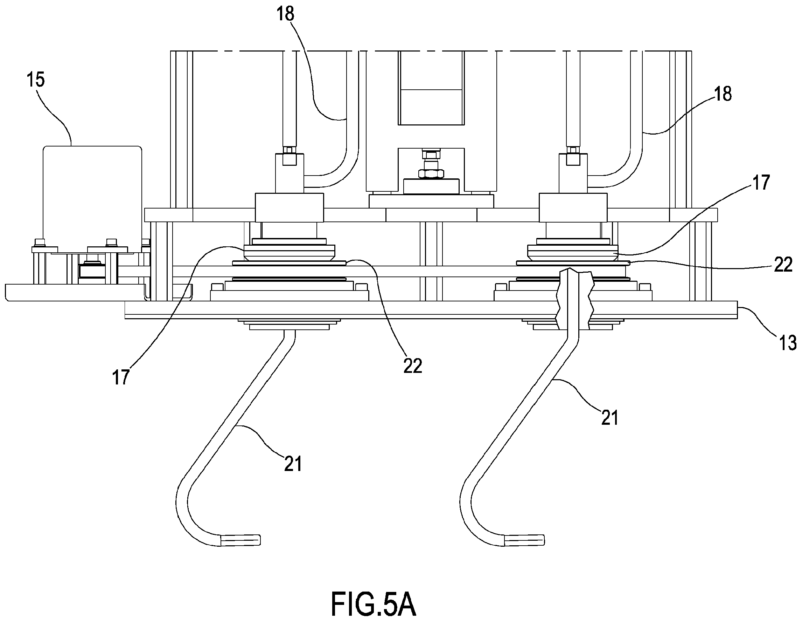

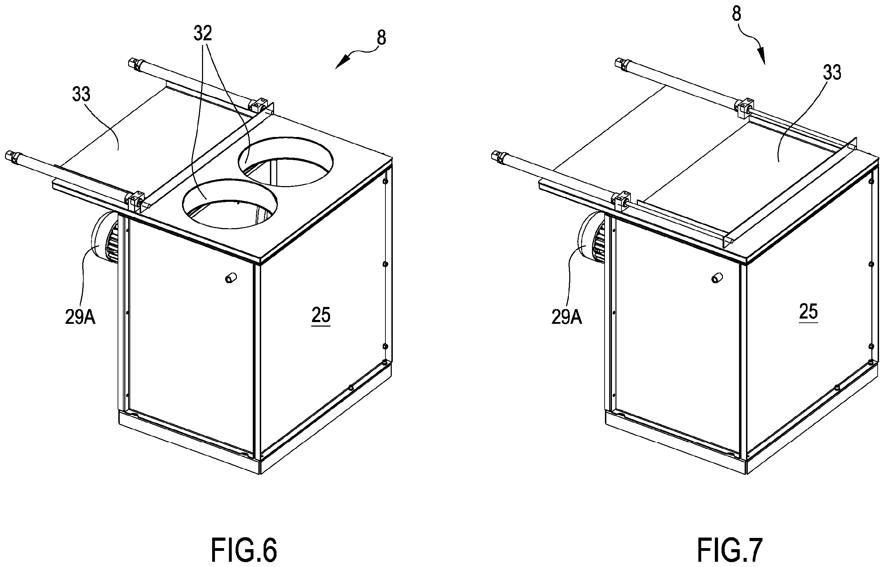

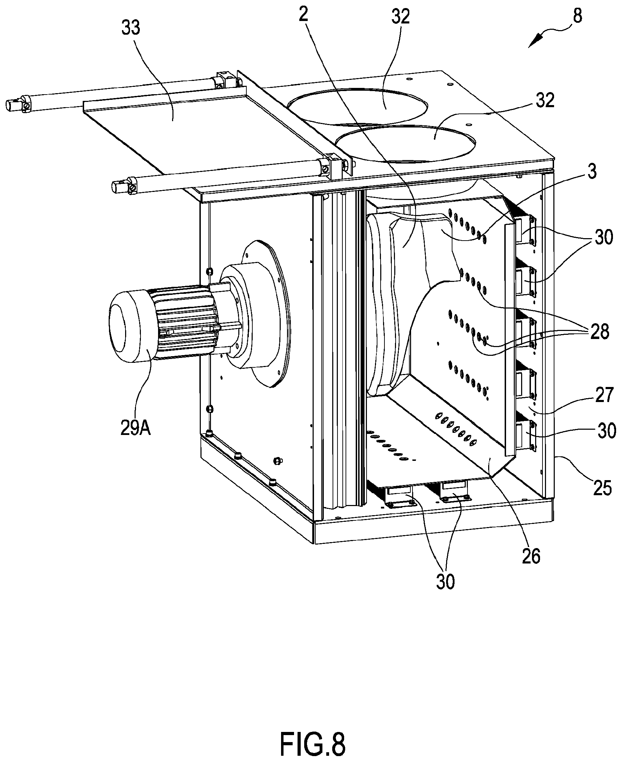

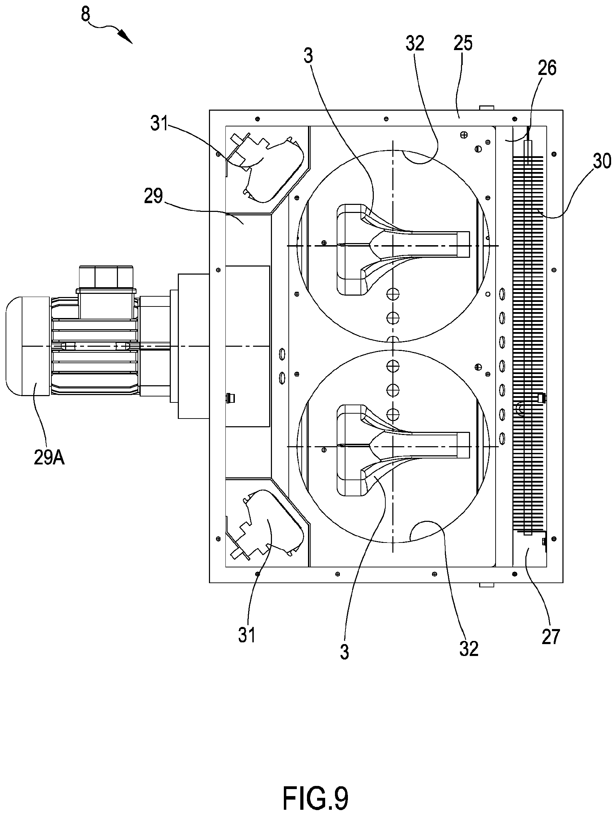

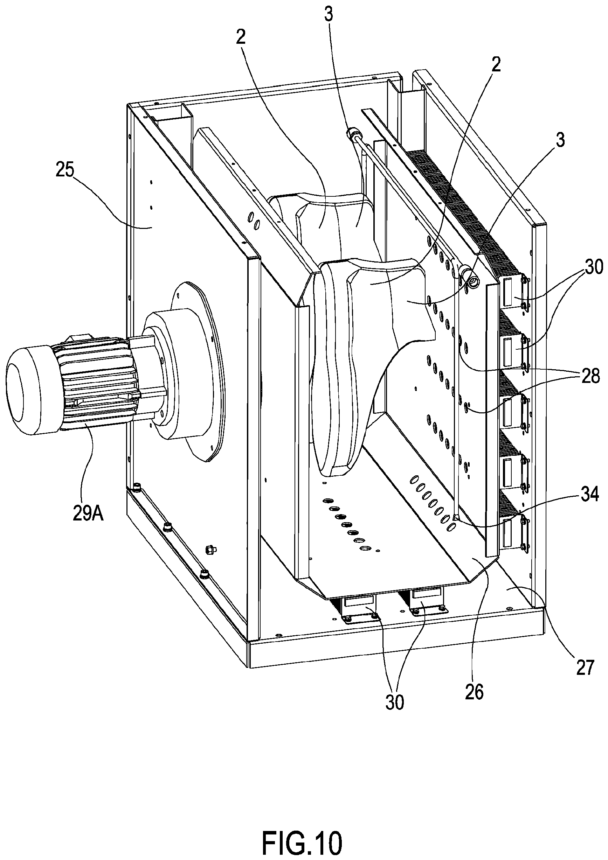

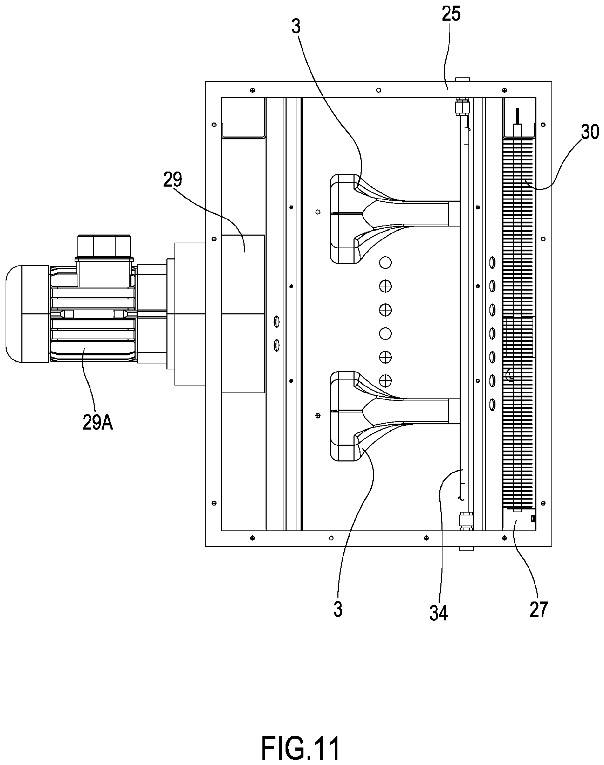

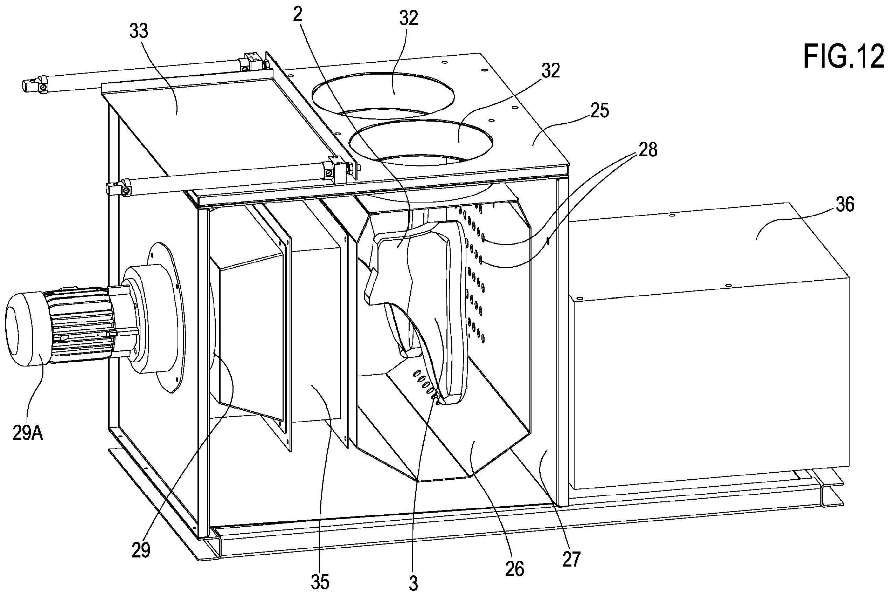

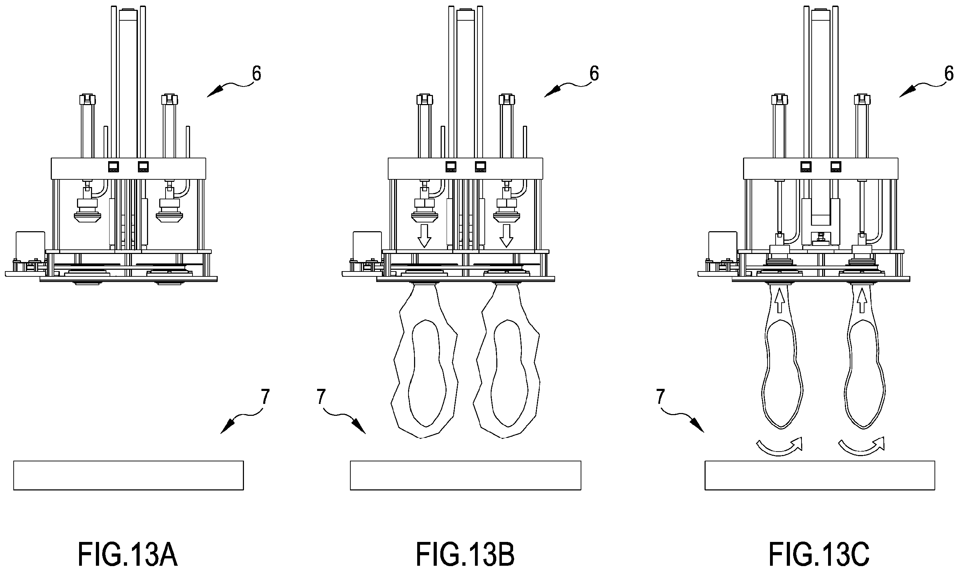

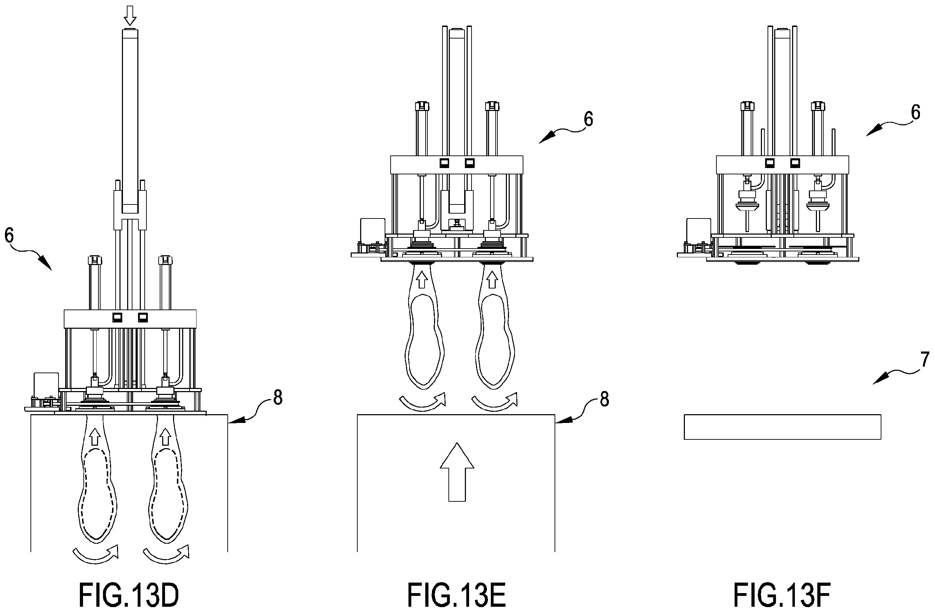

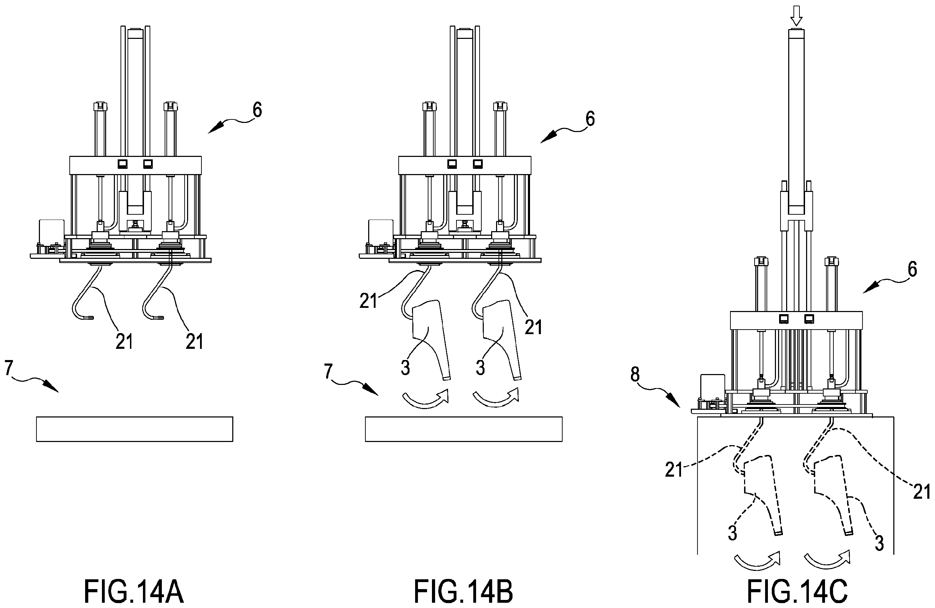

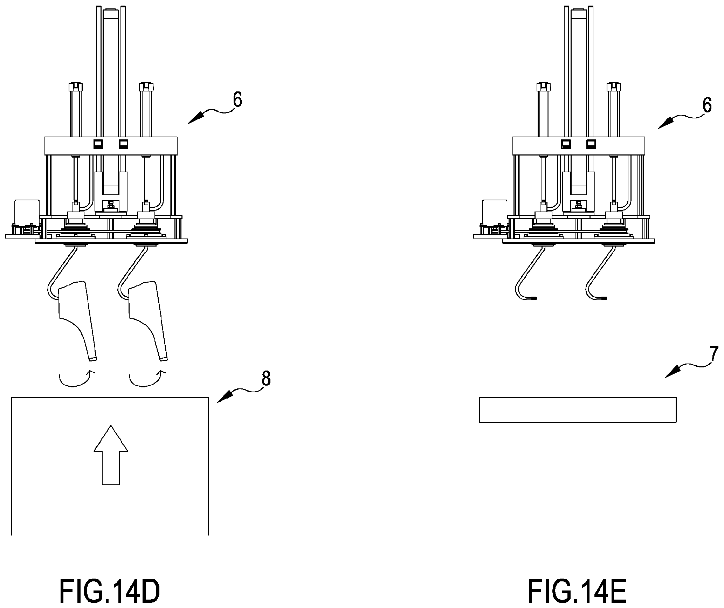

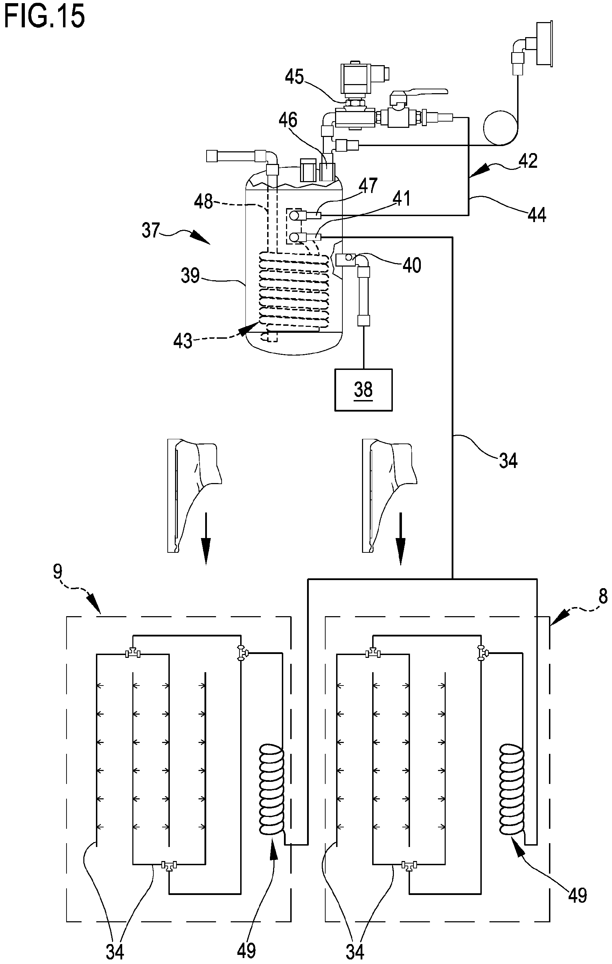

Such description will now be set forth hereinbelow with reference to the enclosed drawings, provided only as a non-limiting example, in which:
▪ figure 1 illustrates an overall perspective view of an apparatus for the three-dimensional thermo-forming and/or the thermo-adhesive bonding of flexible semi-finished products according to the present invention;
▪ figure 2 is a top view of the apparatus of figure 1;
▪ figure 3 is a top view of a variant of the apparatus of figure 1;
▪ figure 4 illustrates a support head of the apparatuses pursuant to the preceding figures;
▪ figure 5 illustrates a sectional portion of the support head of figure 4;
▪ figure 5A illustrates a different configuration of the portion of figure 5;
▪ figure 6 and 7 illustrate external perspective views of a first oven of the apparatuses of the figures 1, 2 and 3 in respective operating positions;
▪ figure 8 illustrates a perspective view of the first oven with some parts removed in order to highlight other parts;
▪ figure 9 is a top view of the first oven of figure 8 with some parts removed in order to highlight other parts;
▪ figure 10 illustrates a perspective view of a second oven of the apparatuses of figures 1, 2 and 3 with some parts removed in order to highlight other parts;
▪ figure 11 is a top view of the second oven of figure 10 with some parts removed in order to highlight other parts;
▪ figure 12 illustrates a perspective view of a refrigerator of the apparatuses of figures 1, 2 and 3 with some parts removed in order to highlight other parts;
▪ figures 13A - 13F illustrate respective steps of a process for the three-dimensional thermo-forming and/or the thermo-adhesive bonding of flexible semi-finished products according to the present invention;
▪ figures 14A - 14E illustrate respective steps of a variant of the process according to the present invention;
▪ figure 15 illustrates a superheater forming part of a variant of the apparatus pursuant to the preceding figures.

### Detailed description of an embodiment of the invention

With reference to figure 1, reference number 1 overall indicates an apparatus for the three-dimensional thermo-forming and/or the thermo-adhesive bonding of flexible semi-finished products for the purpose of manufacturing stable three-dimensional articles.

In the exemplifying but non-limiting embodiments illustrated in the enclosed drawings, the produced articles are footwear or parts of footwear (for example the uppers) obtained by means of the thermo-forming and/or the thermo-adhesive bonding of flexible semi-finished products 2 with sock form constituted by threads and/or fibers of woven or non-woven type and comprising thermoplastic or thermo-adhesive yarns. In accordance with the process of the invention, reference shapes 3 are prepared which reproduce, in negative, the footwear to be formed. Each reference shape 3 is preferably made of plastic material and is such that it can sustain high and low temperatures and high pressures without being ruined and/or deformed. In general, the reference shapes 3 reproduce in negative the shapes of the articles to be manufactured (clothing articles or parts thereof, also technical/sports or medical articles, accessories, covers of various type, etc.). The flexible semi-finished products 2 with sock form are fit on the respective reference shapes and subjected to the process according to the invention in the apparatus 1 according to the invention, as will be described hereinbelow.

The apparatus 1 comprises a frame 4 provided with a base configured for lying on the ground. The frame 4 bears a carousel conveyor 5 provided with a drive shaft that is rotatable around a vertical main axis "X-X" and carrying four support heads 6 which are angularly equidistant from each other by 90°. Around the shaft, four fixed stations are fixed: a loading/unloading station 7, a first heating station provided with a first oven 8, a second heating station provided with a second oven 9, a cooling station provided with a refrigerator 10. The conveyor 5 is movable, upon actuation by a main motor 11, by angular steps of 90° in a manner such that, after each step, each support head 6 is situated at a respective station. Each support head 6 is therefore moved along a closed circular path, along which the four stations lie.

The four support heads 6 are identical to each other, so that hereinbelow only one will be described.

The support head 6 of the apparatus of figures 1 and 2 is better illustrated in figures 4 and 5 and comprises two constraint devices 12 configured to simultaneously hang two reference shapes 3 on said support head 6.

The support head 6 comprises a plate 13 provided with two through openings, each housing a sleeve 14 coupled to the plate 13 by means of a respective bearing in a manner such that the sleeve 14 can rotate in the plate 13 around a respective vertical auxiliary axis "Y-Y" (figure 5). A motor 15 is mounted on the plate 13 and is connected to the two sleeves 14 by means of a transmission, e.g. belt transmission, in order to rotate them around the respective auxiliary axes "Y-Y". A framework is mounted on the plate 13, such framework in turn carrying two actuators 16, e.g. two pneumatic cylinders. Each of the actuators 16 has a stem which carries, at a lower end thereof, a presser 17. The presser 17 is rotatably mounted on the lower end of the stem so to be able to freely rotate around the vertical auxiliary axis "Y-Y". Upon action of the respective actuator 16, the presser 17 is vertically movable between a release position, in which the presser 17 is spaced from the sleeve 14, and a retention position, in which the presser 17 abuts against an edge of the sleeve 14 and closes the through opening. When the presser 17 is situated in the retention position, this can integrally rotate with the sleeve 14 upon action of the motor 15. The constraint devices 12 are therefore rotatably mounted on the support head 6.

Each of the actuators 16 is associated with a conduit 18 which passes through the lower end of the stem and has a mouth 19 which leads to the center of the presser 17. The presser 17 is free to rotate around the mouth 19 of the conduit 18 (figures 4 and 5). In the embodiment illustrated in figures 4 and 5, the mouth 19 of the conduit 18 is extended beyond the respective presser 17. The conduits 18 are in fluid connection with a reduced pressure device, not illustrated, which can be outside the apparatus 1 or part of the apparatus 1 itself.

The sleeve 14 and the presser 17 are configured for constraining a heat-resistant bag 20 (figure 5) between the presser 17 and an edge of the sleeve 14 when the presser 17 is situated in the retention position, in which the bag 20 protrudes from the through opening downwards. More in detail, the presser 17 and the sleeve 14 are configured for retaining a flap of the heat-resistant bag 20 containing the reference shape 3 and hanging below the support head 6. In such configuration, the mouth 19 is situated within the bag 20.

A different configuration of the constraint devices 12 provides for the use of a hook 21 integral with a disc 22 to be combined at each of the through openings. In particular, upon removal of the protruding mouth 19, the disc 22 is abutted above the sleeve 14 and the hook 21 passes through the through opening and protrudes downwards (figure 5A). The presser 17 brought downward in the retention position abuts against the disc 22 and retains the hook 22 in position. The hook 22 is configured for directly supporting a reference shape 3 which is hung thereon without the use of the heat-resistant bag 20. When the presser 17 is situated in the retention position, the disc 21 and the hook 22 can rotate integrally with the sleeve 14 upon action of the motor 15.

In both cases, once hung on the support head 6, the reference shapes 3 hang below the support head 6 and can be rotated around the respective auxiliary axes "Y-Y".

The entire support head 6 is mounted on the carousel conveyor 5 such that it can vertically translate on suitable guides. A main actuator 23, for example a pneumatic cylinder, is configured for moving the support head 6 between a raised position and a lowered position.

The support heads 6 are situated above the four fixed stations.

The loading/unloading station 7 allows an operator to access the support head 6 which is situated in said station 7 in order to hang the reference shapes 3 on which the flexible semi-finished products 2 are fit. The loading/unloading station 7 can comprise a support surface 24 (visible in figure 3) arranged below the reference head 6 in order to facilitate the loading and unloading operations. A distance of the support surface 24 from the reference head is adjustable.

The first oven 8 (figures 6, 7, 8, 9) comprises an external casing 25 and an internal casing 26 delimiting an interspace 27 between them. The internal casing 26 delimits a containment volume defining a heating chamber and has passage holes 28 communicating with the interspace 27. The internal casing 26 is configured for receiving the flexible semi-finished product 2 arranged on the reference shape 3 hung on the support head 6.

A fan 29 with a respective motor 29A is mounted on the external casing 25 and on the internal casing 26 and has a main mouth facing into the containment volume and radially peripheral outlets that are opened into the interspace 27. The fan 29 is therefore operatively active between the containment volume and the interspace 27 for determining the circulation of a heated fluid (typically air) between said containment volume and said interspace 27. The fan 29 suctions the fluid through the main mouth and blows it into the interspace 27 and from here once again into the containment volume through the passage holes 28.

Electrical heating elements 30, illustrated in figures 8 and 9, are placed in the interspace 27 and suitably power supplied and controlled in order to heat the fluid that circulates in the first oven 8. The first oven 8 is also provided with emitters of infrared rays 31 (IR lamps) facing into the interspace 27 (figure 9).

The first oven 8 has two upper openings 32 made through the external casing 25 and the internal casing 26 and a shutter 33 moved by suitable actuators and configured for opening (figure 6) or closing (figure 7) the two upper openings 32 and isolating (or not isolating) the containment volume from the outside environment. The size of each of the openings 32 is such to allow the top insertion in the heating chamber of a respective reference shape 3 hung on the support head 6.

In the raised position, the support head 6 which is situated in the first heating station is spaced from the first oven 8 in order to maintain the two reference shapes 3 outside the heating chamber. When the support head 6 is situated in the raised position, the shutter 33 closes the upper openings 32.

In the lowered position, the upper openings 32 are open, the support head 6 is close to the first oven 8 in order to maintain the two reference shapes 3 inside the heating chamber. In particular, the plate 13 of the support head 6 abuts against an upper wall of the external casing 25 and sealingly closes the upper openings 32. The second oven 9 (figures 10 and 11) has a structure substantially identical to that of the first oven 8 so that the same reference numbers were used for the same elements. Unlike the first oven 8, the second oven 9 does not have the infrared ray emitters 31 but is provided with pipes 34 with nozzles connected to a steam generator and operatively active in the containment volume in order to introduce the steam into the second oven 9. The heated fluid in the second oven 9 therefore comprises a mixture of overheated air and steam. A percentage of overheated air in the mixture of overheated air and steam is for example between 10% and 70%. Even if not illustrated in figures 10 and 11, also the second oven 9 has the two openings 32 to allow to the support head 6 to insert or extract the reference shapes 3 as with the first oven 8.

The refrigerator 10 (figure 12) has a structure similar to that of the first and second oven 8, 9 so that the same reference numbers were used for the same elements. Unlike the first and second oven 8, 9, the refrigerator 10 of course does not have the electrical heating elements 30, the infrared ray emitter 31 and the steam nozzles. The refrigerator 10 instead comprises a cool radiator 35 coupled to a cooler 36 and to the fan 29. The fan 29 is operatively active between the containment volume (or cooling chamber) and the interspace 27 for determining the circulation of a cooled fluid, typically air, between the containment volume and the interspace 27.

In accordance with a first variant of the process according to the invention illustrated in a schematic manner in figures 13A - 13F, the operator provides for arranging two flexible semi-finished products 2 previously made (two socks in the enclosed exemplifying drawings) on respective two reference shapes 3.

The flexible semi-finished products 2 comprise synthetic and/or natural yarns and they are also provided with thermoplastic yarns, i.e. yarns formed by thermoplastic polymers (thermo-fusible and/or heat-shrinking) which have the capacity of modifying its own structure at a specific temperature (usually comprised between 60°C and 180°C) and hence of melting once such temperature is reached and of crosslinking once cooled. The thermoplastic yarns are arranged in different ways and with different densities and percentages. The arrangement and/or the characteristics of the thermoplastic yarns allow obtaining consistency and/or stiffness differentiated at different areas/portions/areas of the article obtained by means of the invention.

The operator possibly provides for arranging further functional elements (e.g. with impermeable membrane or reinforcements) and/or decorative elements above the flexible semi-finished product 2 already fit on the reference shape 3 below the same, in direct contact with the reference shape 3. Possibly, such further elements are previously associated with the flexible semi-finished product 2 by making them temporarily adhere together at some points.

The operator inserts each assembly formed by the flexible semi-finished product 2, by the reference shape 3 and by the possible further elements in a respective heat-resistant bag 20, places the bag 20 below the plate 13 and arranges the end flap of the bag 20 through the sleeve 14 and then between the presser 17 and the sleeve 14, taking care to position the mouth 19 within the bag 20 (figures 13A and 13B). The operator drives the apparatus 1 in order to make the pressers 17 fall into the retention position, in which each presser 17 and the respective sleeve 14 grip the end flap of the respective bag 20 (figure 13C). In this step, the support head 6 is in the raised position and the two bags 20, containing the two reference shapes 3 with the respective flexible semi-finished products 2, hang below the support head 6.

The reduced pressure device is activated and provides for extracting the air from the bags 20 through each mouth 19 so as to make each bag 20 adhere to the respective flexible semi-finished product 2 and to the respective reference shape 3 and to exert a uniform pressure on the flexible semi-finished product 2 (figure 13C). The heat-resistant bag 20 under vacuum allows compressing all the elements on the reference shape 3 and holding them in position during the subsequent heating operations and the cooling. The heat-resistant bag 20 under vacuum allows compressing the flexible semi-finished product even if this is made of gas-impermeable material. For example, the reduced pressure in the bag 20 can vary from 20kPa to 80kPa and a pressure on the flexible semi-finished product 2 is comprised between 200 g/cm² and 800 g/cm².

The carousel conveyor 5 rotates by an angular step of 90° and carries the support head 6 above the first oven 8. The motor 15 starts to rotate the two bags 20 around the auxiliary axes "Y-Y" thereof.

After the movement of the shutter 33 and the opening of the two upper openings 32, the support head 6 is brought into the lowered position and the bags 20 with the two reference shapes 3 are lowered and rotated with continuity inside the heating chamber of the first oven 8 (figure 13D). In the first oven 8, the flexible semi-finished product 2 with the possible additional elements is pre-heated by means of the infrared rays and of the hot circulating air. The flexible semi-finished product 2 in the first oven 8 is brought, for example, to a temperature of 90°C - 280°C. The thermoplastic yarns start to modify their own structure.

Once the pre-heating is completed, the support head 6 is lifted and the bags 20 with the reference shapes 3 and the semi-finished products 2 are extracted from the first oven 8 while each bag 20 is maintained under reduced pressure and rotating (figure 13E).

The shutter 33 of the first oven 8 is closed and the carousel conveyor 5 rotates by a further 90° step and carries the support head 6 above the second oven 8.

After the movement of the shutter 33 and the opening of the two upper openings 32 of the second oven 9, the support head 6 is once again brought into the lowered position and the bags 20 with the two reference shapes 3 are lowered and rotated inside the heating chamber of the second oven 8 (in a manner analogous to that illustrated in figure 13D for the first oven 8). In the second oven 9, the flexible semi-finished product 2 with the possible additional elements is heated by means of the steam and of the hot air circulating and always maintained under pressure in the bag 20. The flexible semi-finished product 2 in the second oven 9 is brought, for example, to a temperature of 90°C - 280°C. The thermoplastic yarns melt, being inserted between the other threads of the flexible manufactured product and/or of the additional elements.

Once the heating is completed, the support head 6 is lifted and the bags 20 with the reference shapes 3 and the semi-finished products 2 are extracted from the second oven 9 while each bag 20 is still maintained under reduced pressure and rotating.

The shutter 33 of the second oven 9 is closed and the carousel conveyor 5 rotates a further step of 90° and brings the support head 6 above the refrigerator 10.

After the movement of the shutter 33 and the opening of the two upper openings 32 of the refrigerator 10, the support head 6 is once again brought into the lowered position and the bags 20 with the two reference shapes 3 are lowered and rotated within the cooling chamber of the refrigerator (in a manner analogous to that illustrated in figure 13D for the first oven 8).

In the refrigerator 10, the flexible semi-finished product 2 with the possible additional elements is cooled by cool radiator means and by the cool air circulating and always maintained under pressure in the bag 20. The flexible semi-finished product 2 in the refrigerator 10 is for example brought to a temperature of 5°C - 20°C. In this manner, the thermoplastic yarns crosslink, determining the stabilization of the three-dimensional article and the bonding of the additional elements.

Once the cooling is completed, the support head 6 is lifted and the bags 20 with the reference shapes 3 and the semi-finished products 2 are extracted from the refrigerator 10 while each bag 20 is still maintained under reduced pressure and rotating, and then the carousel conveyor 5 rotates by a further step of 90° and once again brings the support head 6 into the loading/unloading station 7 where the operator removes the bags 20 from the support head 6 and extracts the reference shape 3 with the semi-finished product 2 stabilized by the heat-resistant bag 20.

Since there are four support heads 6 and there are four stations, after each angular step of the carousel conveyor 5, each support head 6 is always situated in a station, or in another words all four support heads 6 are simultaneously situated in the four stations.

The carousel conveyor 5 sequentially arranges pairs of reference shapes 3 provided with semi-finished products 2 in the loading/unloading station 7, in the heating chamber of the first oven 8, in the heating chamber of the second oven 9, in the cooling chamber of the refrigerator 10 and once again in the loading/unloading station 7. The stay time of each support head 6 in each station is about 10s - 90s. The transport time between one station and the next is about 2s - 7s.

In the variant of the process schematically illustrated in figures 14A - 14E, the heat-resistant bags 20 are not used, for example since the flexible semi-finished product 2 is elastic and remains adherent to the reference shape 3 and/or there are no additional elements to retain. The reference shapes 3 are therefore coupled to the above-illustrated hooks 21. The hooks 21 are engaged in seats, not illustrated, made in the reference shapes 3. The reduced pressure device is deactivated but the above-illustrated processing sequence is the same. In this case, since there are no bags 20, the steam in the second oven 9 contributes to softening the flexible semi-finished product 2, to improve the penetration of the thermoplastic materials between the threads/fibers and to improve the quality of the obtained articles.

In the variant of the apparatus of figure 3, each support head 6 comprises four constraint devices 12 that are structurally identical to the two described above. In addition, the first oven 8, the second oven 9 and the refrigerator 10 are twice the size of those described above and are each provided with four upper openings 32, one for each constraint device 12. Each support head 6 therefore simultaneously carries four flexible semi-finished products 2 on respective reference shapes 3.

In an embodiment variant, in place of the first oven 8 and of the second oven 9 with heating devices that are different from each other, the apparatus 1 is provided with two ovens that are identical to each other. Both the first oven 8 and the second oven 9 of such variant are structurally similar to the second oven 9 described above (figures 10 and 11).

Both the first oven 8 and the second oven 9 according to the variant therefore comprise the electrical heating elements 30 and the pipes 34 with nozzles connected to the steam generator 38 and operatively active in the containment volume in order to introduce the steam into the respective oven 8, 9. The heated fluid both in the first and in the second oven 8, 9 is or comprises overheated steam.

For such purpose, such variant comprises a superheater 37 as illustrated in figure 15 and which is operatively interposed between the steam generator 38, illustrated only in a schematic manner in figure 15, and the pipes 34 of the first and second oven 8, 9 (also schematically illustrated in figure 15).

The superheater 37 comprises a tank 39 shaped as a barrel placed vertically and having a main inlet 40 connected to the steam generator 38, a main outlet 41 connected to the pipes 34 of the first and of the second oven 8, 9 and a recirculation circuit 42.

The recirculation circuit 42 comprises a heat exchange portion housed in the container 39 and defined by a coil pipe 43. The coil pipe 43 has a helical progression with a central axis of the helix substantially coinciding with a main axis of the container 39.

The recirculation circuit 42 also comprises a recirculation conduit 44 provided with a solenoid valve 45. The recirculation conduit 45 has one end connected to an upper portion of the container 39 at a drawing mouth 46 defined by an opening in the abovementioned upper portion. An opposite end of the recirculation conduit 45 is connected to an inlet 47 of the coil 43. An opposite end of the coil 43 defines said main outlet 41. Hence, the coil-like heat exchange portion 43 is connected to the drawing mouth 46 and to the main outlet 41. In the non-limiting illustrated embodiment, starting from the inlet 47, the coil 43 is helically extended downward towards the bottom of the container 39 and then a substantially vertical connector section connects it to the main outlet 41. The main outlet 41 is arranged facing the inlet 47.

The superheater 37 also comprises a discharge for condensate, defined by a vertical pipe 48 that draws from a bottom portion of the container itself.

Each of the ovens 8, 9, which are identical to each other, comprises a heat exchanger 49 also defined by a helical coil. The heat exchanger 49 is housed in the heating chamber of the respective oven 8, 9 and is configured for heating the steam present in the pipes 34 by means of heat present in the heating chamber. The high-pressure, e.g. 4 bar, and high-temperature, e.g., 150 °C, steam coming from the steam generator 38 enters into the container 39 through the main inlet 40, hitting the coil 43. A part of the steam condenses, falling on the bottom, where it is drawn by the vertical pipe 48 and carried away. By opening the valve 45, a part of the steam (at high pressure and high temperature) present in the container 39 exits through the drawing mouth 46, is expanded by being partially cooled, for example to 100°C, and passes through the coil 43. While it moves in the coil at a pressure close to atmospheric pressure, e.g. 4 bar, the steam is once again heated (heating with variable volume, the steam is also expanded in the coil 43) due to the heat transferred to the coil 43 by the steam in the container 39. The steam exiting from the main outlet 41 is therefore overheated steam, e.g. with a temperature of 150 °C and a pressure from 1 to 5 bar.

The overheated steam then also moves through the coils of the heat exchangers 49 present in the ovens 8, 9, once again increasing temperature before exiting from the nozzles.

Control systems allow controlling the properties of the overheated steam or of a mixture of overheated air and overheated steam in a different manner in the first oven 8 and in the second oven 9, so as to obtain the desired effect on the flexible semi-finished product 2 (pre-heating in the first oven 8 and melting of the thermoplastic yarns in the second oven 9).

## Claims

1. Apparatus for the three-dimensional thermo-forming and/or the thermo-adhesive bonding of flexible semi-finished products, comprising:
▪ a loading/unloading station (7);
▪ at least one oven (8, 9) having at least one heating chamber and comprising heaters operatively active in the heating chamber;
▪ a refrigerator (10) having at least one cooling chamber and comprising coolers operatively active in the cooling chamber;
▪ a conveyor (5) comprising at least one support head (6) configured for supporting at least one reference shape (3) of an article to be manufactured;
wherein the conveyor (5) is movable with respect to the loading/unloading station (7), to said at least one oven (8, 9), to the refrigerator (10) in order to sequentially arrange the reference shape (3) in the loading/unloading station (7), in the heating chamber of said at least one oven (8, 9), in the cooling chamber of the refrigerator (10);
**characterized in that**
the heaters of said at least one oven (8, 9) comprise a steam generator (38).

2. Apparatus according to claim 1, wherein the steam generator (38) is connected to nozzles operatively active in a containment volume and/or in an interspace (27) of said at least one oven (8, 9) in order to introduce the steam in said oven (8, 9).

3. Apparatus according to claim 1 or 2, wherein the steam introduced in said at least one oven (8, 9) is overheated steam.

4. Apparatus according to claim 1 or 2 or 3, comprising a superheater (37) operatively interposed between the steam generator (38) and said at least one oven (8, 9), wherein the superheater (37) is configured for generating overheated steam.

5. Apparatus according to claim 4, wherein the superheater (37) comprises a container (39) having a main inlet (40) in fluid communication with the steam generator (38), a main outlet (41) in fluid communication with said at least one oven (8, 9) and a recirculation circuit (42) arranged at least partly in the container (39).

6. Apparatus according to claim 5, wherein the recirculation circuit (42) comprises a heat exchange portion (43) housed in the container (39), wherein the heat exchange portion (43) is connected to a mouth (46) for drawing steam from the container (39) and to the main outlet (41).

7. Apparatus according to one of the claims 1 to 6, wherein said at least one oven (8, 9) comprises pipes (34) provided with nozzles and connected to the steam generator (38); wherein at least one portion of said pipes (34) defines a heat exchanger (49) configured for heating the steam present in the pipes (34) by means of heat present in the heating chamber.

8. Apparatus according to one of the claims 1 to 7, wherein the conveyor (5) is a carousel rotatable around a main axis (X-X) and the loading/unloading station (7), said at least one oven (8, 9) and the refrigerator (10) are arranged around the main axis (X-X); wherein the carousel comprises a plurality of support heads (6) arranged around the main axis (X-X).

9. Apparatus according to one of the claims 1 to 8, wherein the conveyor (5) is movable by steps, wherein, after each step, said at least one support head (6) is situated at the loading/unloading station (7) or at said at least one oven (8, 9) or at the refrigerator (10); or wherein, after each step, at least one of the support heads (6) is situated at the loading/unloading station (7), at least one of the support heads (6) is situated at said at least one oven (8, 9), one of the support heads (6) is situated at the refrigerator (10).

10. Apparatus according to one of the claims 1 to 9, wherein the heaters of said at least one oven (8, 9) comprise: electrical heating elements (30) and a fan (29) to cause the circulation of a fluid heated by the electrical heating elements (30).

11. Apparatus according to one of the claims 1 to 10, wherein said at least one oven (8, 9) comprises a first oven (8) and a second oven (9) arranged one after the other along a path of the conveyor (5); wherein the heaters of the first oven (8) comprise an infrared ray emitter (31); wherein the heaters of the second oven (9) comprise the steam generator (38).

12. Apparatus according to one of the claims 1 to 10, wherein said at least one oven (8, 9) comprises a first oven (8) and a second oven (9) arranged one after the other along a path of the conveyor (5); wherein the heaters of the first oven (8) and also of the second oven (9) comprise the steam generator (38).

13. Apparatus according to one of the claims 1 to 12, wherein the support head (6) is placed above said at least one oven (8, 9) or the refrigerator (10); wherein the support head (6) comprises constraint devices (12) configured to hang said at least one reference shape (3) on the support head (6).

14. Apparatus according to claim 13, wherein the constraint devices (12) comprise a plate (13) provided with a through opening and a presser (17) operating on said through opening, preferably for constraining a bag (20) configured for containing the reference shape (3) between the presser (17) and an edge of the through opening or for constraining a hook (21) so that it protrudes from the through opening downwards.

15. Apparatus according to one of the claims 13 or 14, wherein the conveyor (5) comprises a main actuator (23) for the support head (6); wherein the main actuator (23) is configured for moving the support head (6) between a raised position and a lowered position; wherein in the raised position, the support head (6) is spaced from said at least one oven (8, 9) or from the refrigerator (10) in order to maintain said at least one reference shape (3) outside the heating chamber or the cooling chamber; wherein in the lowered position, the support head (6) is close to said at least one oven (8, 9) or to the refrigerator (10) in order to maintain said at least one reference shape (3) inside the heating chamber or the cooling chamber.

16. Apparatus according to claim 15, wherein said at least one oven (8, 9) and the refrigerator (10) each have at least one upper opening (32) to allow the entry of the reference shape (3) inside the heating chamber or the cooling chamber; wherein preferably the support head (6), when it is situated in the lowered position, sealingly closes said upper opening (32); wherein preferably said at least one oven (8, 9) and the refrigerator (10) each comprise a shutter (33) configured for closing said upper opening (32) when the support head (6) is situated in the raised position.

17. Apparatus according to claim 14, wherein the support head (6) comprises a conduit (18) in fluid connection with a reduced pressure device, wherein a mouth (19) of the conduit (18) is arranged at each of the constraint devices (12) in order to be placed in the bag (20) when said bag (20) is constrained to the constraint devices (12); wherein preferably the mouth (19) of the conduit (18) is placed on the presser (17).

18. Apparatus according to one of the claims 13 to 17, wherein the constraint devices (12) are rotatably mounted on the support head (6) and the support head (6) comprises a motor (15) connected to the constraint devices (12) in order to rotate them around a respective auxiliary axis (Y-Y).

## Patentansprüche

1. Vorrichtung für das dreidimensionale Thermoformen und/oder das thermisch haftende Verbinden flexibler Halbzeuge, umfassend:
• eine Lade-/Entlade-Station (7);
• wenigstens einen Ofen (8, 9), welcher wenigstens eine Heizkammer aufweist und in der Heizkammer tätige Heizelemente umfasst;
• ein Kühlgerät (10), welches wenigstens eine Kühlkammer aufweist und in der Kühlkammer tätige Kühlelemente umfasst;
• eine Fördereinrichtung (5), welche wenigstens einen Stützkopf (6) umfasst, welcher dazu eingerichtet ist, wenigstens eine Referenzkontur (3) eines herzustellenden Artikels zu stützen;
wobei die Fördereinrichtung (5) mit Bezug auf die Lade-/Entlade-Station (7), den wenigstens einen Ofen (8, 9), das Kühlgerät (10) bewegbar ist, um nacheinander die Referenzkontur (3) in der Lade-/Entlade-Station (7), in der Heizkammer des wenigstens einen Ofens (8, 9), in der Kühlkammer des Kühlgeräts (10) anzuordnen;
**dadurch gekennzeichnet, dass**
die Heizelemente des wenigstens einen Ofens (8, 9) einen Dampferzeuger (38) umfassen.

2. Vorrichtung nach Anspruch 1, wobei der Dampferzeuger (38) mit Düsen verbunden ist, welche in einem Sicherheitsbehältervolumen und/oder in einem Zwischenraum (27) des wenigstens einen Ofens (8, 9) tätig sind, um den Dampf in den Ofen (8, 9) einzuführen.

3. Vorrichtung nach Anspruch 1 oder 2, wobei der in den wenigstens einen Ofen (8, 9) eingeführte Dampf ein überhitzter Dampf ist.

4. Vorrichtung nach Anspruch 1 oder 2 oder 3, umfassend einen Überhitzer (37), welcher betriebsmäßig zwischen dem Dampferzeuger (38) und dem wenigstens einen Ofen (8, 9) angeordnet ist, wobei der Überhitzer (37) dazu eingerichtet ist, überhitzten Dampf zu erzeugen.

5. Vorrichtung nach Anspruch 4, wobei der Überhitzer (37) einen Behälter (39) umfasst, welcher einen Haupteinlass (40) in Fluidverbindung mit dem Dampferzeuger (38), einen Hauptauslass (41) in Fluidverbindung mit dem wenigstens einen Ofen (8, 9) und einen Rezirkulationskreislauf (42), welcher wenigstens teilweise in dem Behälter (39) angeordnet ist, aufweist.

6. Vorrichtung nach Anspruch 5, wobei der Rezirkulationskreislauf (42) einen in dem Behälter (39) untergebrachten Wärmetauschabschnitt (43) umfasst, wobei der Wärmetauschabschnitt (43) mit einer Mündung (46) verbunden ist, um Dampf von dem Behälter (39) und zu dem Hauptauslass (41) zu lenken.

7. Vorrichtung nach einem der Ansprüche 1 bis 6, wobei der wenigstens eine Ofen (8, 9) Rohre (34) umfasst, welche mit Düsen vorgesehen und mit dem Dampferzeuger (38) verbunden sind; wobei wenigstens ein Abschnitt der Rohre (34) einen Wärmetauscher (49) definiert, welcher dazu eingerichtet ist, den in den Rohren (34) vorhandenen Dampf mittels in der Heizkammer vorhandener Wärme zu heizen.

8. Vorrichtung nach einem der Ansprüche 1 bis 7, wobei die Fördereinrichtung (5) ein um eine Hauptachse (X-X) drehbares Karussell ist und die Lade-/EntladeStation (7), der wenigstens eine Ofen (8, 9) und das Kühlgerät (10) um die Hauptachse (X-X) angeordnet sind; wobei das Karussell eine Mehrzahl von um die Hauptachse (X-X) angeordneten Stützköpfe (6) umfasst.

9. Vorrichtung nach einem der Ansprüche 1 bis 8, wobei die Fördereinrichtung (5) in Schritten bewegbar ist, wobei, nach jedem Schritt, der wenigstens eine Stützkopf (6) an der Lade-/Entlade-Station (7) oder an dem wenigstens einen Ofen (8, 9) oder an dem Kühlgerät (10) gelegen ist; oder wobei, nach jedem Schritt, wenigstens einer der Stützköpfe (6) an der Lade-/Entlade-Station (7) gelegen ist, wenigstens einer der Stützköpfe (6) an dem wenigstens einen Ofen (8, 9) gelegen ist, einer der Stützköpfe (6) an dem Kühlgerät (10) gelegen ist.

10. Vorrichtung nach einem der Ansprüche 1 bis 9, wobei die Heizelemente des wenigstens einen Ofens (8, 9) umfassen: elektrische Heizelemente (30) und einen Gebläse (29), um die Zirkulation eines von den elektrischen Heizelementen (30) geheizten Fluides zu veranlassen.

11. Vorrichtung nach einem der Ansprüche 1 bis 10, wobei der wenigstens eine Ofen (8, 9) einen ersten Ofen (8) und einen zweiten Ofen (9) umfasst, die einer nach dem anderen entlang eines Pfads der Fördereinrichtung (5) angeordnet sind; wobei die Heizelemente des ersten Ofens (8) einen Infrarot-Strahlsender (31) umfassen, wobei die Heizelemente des zweiten Ofens (9) den Dampferzeuger (38) umfassen.

12. Vorrichtung nach einem der Ansprüche 1 bis 10, wobei der wenigstens eine Ofen (8, 9) einen ersten Ofen (8) und einen zweiten Ofen (9) umfasst, die einer nach dem anderen entlang eines Pfads der Fördereinrichtung (5) angeordnet sind; wobei die Heizelemente des ersten Ofens (8) und auch des zweiten Ofens (9) den Dampferzeuger (38) umfassen.

13. Vorrichtung nach einem der Ansprüche 1 bis 12, wobei der Stützkopf (6) oberhalb des wenigstens einen Ofens (8, 9) oder des Kühlgeräts (10) platziert ist; wobei der Stützkopf (6) Beschränkungsvorrichtungen (12) umfasst, die dazu eingerichtet sind, die wenigstens eine Referenzkontur (3) an den Stützkopf (6) zu hängen.

14. Vorrichtung nach Anspruch 13, wobei die Beschränkungsvorrichtungen (12) eine Platte (13) umfassen, die mit einer Durchgangsöffnung und einem an der Durchgangsöffnung tätigen Presser (17) vorgesehen sind, vorzugsweise um eine Tasche (20), die dazu eingerichtet ist, die Referenzkontur (3) zwischen dem Presser (17) und einem Rand der Durchgangsöffnung zu halten, zu beschränken oder um einen Haken (21) zu beschränken, so dass er von der Durchgangsöffnung nach unten vorsteht.

15. Vorrichtung nach einem der Ansprüche 13 oder 14, wobei die Fördereinrichtung (5) einen Hauptaktuator (23) für den Stützkopf (6) umfasst, wobei der Hauptaktuator (23) dazu eingerichtet ist, den Stützkopf (6) zwischen einer angehobenen Position und einer gesenkten Position zu bewegen; wobei in der angehobenen Position der Stützkopf (6) von dem wenigstens einen Ofen (8, 9) oder von dem Kühlgerät (10) beabstandet ist, um die wenigstens eine Referenzkontur (3) außerhalb der Heizkammer oder der Kühlkammer zu halten; wobei in der abgesenkten Position der Stützkopf (6) nahe an dem wenigstens einen Ofen (8, 9) oder dem Kühlgerät (10) ist, um die wenigstens eine Referenzkontur (3) innerhalb der Heizkammer oder der Kühlkammer zu halten.

16. Vorrichtung nach Anspruch 15, wobei der wenigstens eine Ofen (8, 9) und das Kühlgerät (10) jeweils wenigstens eine obere Öffnung (32) aufweisen, um den Eintritt der Referenzkontur (3) in die Heizkammer oder die Kühlkammer zu erlauben; wobei vorzugsweise der Stützkopf (6), wenn er in der abgesenkten Position gelegen ist, dichtend die obere Öffnung (32) schließt; wobei vorzugsweise der wenigstens eine Ofen (8, 9) und das Kühlgerät (10) jeweils einen Verschluss (33) umfassen, welcher dazu eingerichtet ist, die obere Öffnung (32) zu schließen, wenn der Stützkopf (6) in der angehobenen Position gelegen ist.

17. Vorrichtung nach Anspruch 14, wobei der Stützkopf (6) eine Leitung (18) in Fluidverbindung mit einer Reduzierter-Druck-Vorrichtung umfasst, wobei eine Mündung (19) der Leitung (18) an jeder der Beschränkungsvorrichtungen (12) angeordnet ist, um in der Tasche (20) platziert zu werden, wenn die Tasche (20) von den Beschränkungsvorrichtungen (12) beschränkt ist; wobei vorzugsweise die Mündung (19) der Leitung (18) auf dem Presser (17) platziert ist.

18. Vorrichtung nach einem der Ansprüche 13 bis 17, wobei die Beschränkungsvorrichtungen (12) drehbar an dem Stützkopf (6) angebracht sind und der Stützkopf (6) einen Motor (15) umfasst, welcher mit den Beschränkungsvorrichtungen (12) verbunden ist, um sie um eine entsprechende Hilfsachse (Y-Y) zu drehen.

## Revendications

1. Appareil pour le thermoformage et/ou la liaison thermoadhésive tridimensionnel·le de produits semi-finis flexibles, comprenant :
▪ un poste de chargement/déchargement (7) ;
▪ au moins un four (8, 9) ayant au moins une chambre de chauffage et comprenant des dispositifs de chauffage fonctionnellement actifs dans la chambre de chauffage ;
▪ un réfrigérateur (10) ayant au moins une chambre de refroidissement et comprenant des dispositifs de refroidissement fonctionnellement actifs dans la chambre de refroidissement ;
▪ un transporteur (5) comprenant au moins une tête de support (6) conçue pour le support d'au moins une forme de référence (3) d'un article à fabriquer ;
le transporteur (5) étant mobile par rapport au poste de chargement/déchargement (7), au niveau dudit au moins un four (8, 9), vers le réfrigérateur (10) afin de disposer séquentiellement la forme de référence (3) dans le poste de chargement/déchargement (7), dans la chambre de chauffage dudit au moins un four (8, 9), dans la chambre de refroidissement du réfrigérateur (10) ;
**caractérisé en ce que** les dispositifs de chauffage dudit au moins un four (8, 9) comprennent un générateur de vapeur (38).

2. Appareil selon la revendication 1, le générateur de vapeur (38) étant relié aux buses fonctionnellement actives dans un volume de confinement et/ou dans un espace intermédiaire (27) dudit au moins un four (8, 9) afin d'introduire la vapeur dans ledit four (8, 9).

3. Appareil selon la revendication 1 ou 2, la vapeur introduite dans ledit au moins un four (8, 9) étant de la vapeur surchauffée.

4. Appareil selon la revendication 1 ou 2 ou 3, comprenant un surchauffeur (37) fonctionnellement interposé entre le générateur de vapeur (38) et ledit au moins un four (8, 9), le surchauffeur (37) étant conçu pour générer de la vapeur surchauffée.

5. Appareil selon la revendication 4, le surchauffeur (37) comprenant un récipient (39) ayant un orifice d'entrée principal (40) en communication fluidique avec le générateur de vapeur (38), un orifice de sortie principal (41) en communication fluidique avec ledit au moins un four (8, 9) et un circuit de recirculation (42) disposé au moins partiellement dans le récipient (39).

6. Appareil selon la revendication 5, le circuit de recirculation (42) comprenant une portion d'échange de chaleur (43) logée dans le récipient (39), la portion d'échange de chaleur (43) étant reliée à une bouche (46) pour extraire la vapeur du récipient (39) et vers l'orifice de sortie principal (41).

7. Appareil selon l'une des revendications 1 à 6, ledit au moins un four (8, 9) comprenant des conduites (34) pourvues de buses et raccordées au générateur de vapeur (38) ; au moins une portion desdites conduites (34) définissant un échangeur de chaleur (49) conçu pour chauffer la vapeur présente dans les conduites (34) à l'aide de la chaleur présente dans la chambre de chauffage.

8. Appareil selon l'une des revendications 1 à 7, le transporteur (5) étant un tapis roulant pouvant tourner autour d'un axe principal (X-X) et le poste de chargement/déchargement (7), dudit au moins un four (8, 9) et le réfrigérateur (10) étant disposés autour de l'axe principal (X-X) ; le tapis roulant comprenant une pluralité de têtes de support (6) disposées autour de l'axe principal (X-X).

9. Appareil selon l'une des revendications 1 à 8, le transporteur (5) étant mobile par étapes, après chaque étape, ladite au moins une tête de support (6) est située au niveau du poste de chargement/déchargement (7) ou au niveau dudit au moins un four (8, 9) ou au niveau du réfrigérateur (10) ; ou, après chaque étape, au moins l'une des têtes de support (6) étant située au niveau du poste de chargement/déchargement (7), au moins l'une des têtes de support (6) étant située au niveau dudit au moins un four (8, 9), l'une des têtes de support (6) étant située au niveau du réfrigérateur (10).

10. Appareil selon l'une des revendications 1 à 9, les dispositifs de chauffage dudit au moins un four (8, 9) comprenant : des éléments de chauffage électrique (30) et un ventilateur (29) pour provoquer la circulation d'un fluide chauffé par les éléments de chauffage électrique (30).

11. Appareil selon l'une des revendications 1 à 10, ledit au moins un four (8, 9) comprenant un premier four (8) et un second four (9) disposés l'un après l'autre le long d'un trajet du transporteur (5) ; les dispositifs de chauffage du premier four (8) comprenant un émetteur de rayon infrarouge (31) ; les dispositifs de chauffage du second four (9) comprenant le générateur de vapeur (38).

12. Appareil selon l'une des revendications 1 à 10, ledit au moins un four (8, 9) comprenant un premier four (8) et un second four (9) disposés l'un après l'autre le long d'un trajet du transporteur (5) ; les dispositifs de chauffage du premier four (8) et également du second four (9) comprenant le générateur de vapeur (38).

13. Appareil selon l'une des revendications 1 à 12, la tête de support (6) étant placée au-dessus dudit au moins un four (8, 9) ou du réfrigérateur (10) ; la tête de support (6) comprenant des dispositifs de contrainte (12) conçus pour suspendre ladite au moins une forme de référence (3) sur la tête de support (6).

14. Appareil selon la revendication 13, les dispositifs de contrainte (12) comprenant une plaque (13) pourvue d'une ouverture traversante et d'un dispositif de compression (17) fonctionnant sur ladite ouverture traversante, préférablement pour contraindre un sac (20) conçu pour contenir la forme de référence (3) entre le dispositif de compression (17) et un bord de l'ouverture traversante ou pour contraindre un crochet (21) de sorte qu'il fasse saillie depuis l'ouverture traversante vers le bas.

15. Appareil selon l'une des revendications 13 ou 14, le transporteur (5) comprenant un dispositif d'actionnement principal (23) pour la tête de support (6) ; le dispositif d'actionnement principal (23) étant conçu pour déplacer la tête de support (6) entre une position élevée et une position abaissée ; dans la position élevée, la tête de support (6) est espacée dudit au moins un four (8, 9) ou du réfrigérateur (10) afin de maintenir ladite au moins une forme de référence (3) à l'extérieur de la chambre de chauffage ou de la chambre de refroidissement ; dans la position abaissée, la tête de support (6) étant proche dudit au moins un four (8, 9) ou du réfrigérateur (10) afin de maintenir ladite au moins une forme de référence (3) à l'intérieur de la chambre de chauffage ou de la chambre de refroidissement.

16. Appareil selon la revendication 15, ledit au moins un four (8, 9) et le réfrigérateur (10) ayant chacun au moins une ouverture supérieure (32) pour permettre l'entrée de la forme de référence (3) à l'intérieur de la chambre de chauffage ou de la chambre de refroidissement ; préférablement la tête de support (6), lorsqu'elle est située dans la position abaissée, ferme de manière étanche ladite ouverture supérieure (32) ; préférablement ledit au moins un four (8, 9) et le réfrigérateur (10) chacun comprenant un obturateur (33) conçu pour fermer ladite ouverture supérieure (32) lorsque la tête de support (6) est située dans la position élevée.

17. Appareil selon la revendication 14, la tête de support (6) comprenant une conduite (18) en raccordement fluidique avec un dispositif à pression réduite, une bouche (19) de la conduite (18) étant disposée au niveau de chacun des dispositifs de contrainte (12) afin d'être placée dans le sac (20) lorsque ledit sac (20) est contraint aux dispositifs de contrainte (12) ; préférablement la bouche (19) de la conduite (18) étant placée sur le dispositif de compression (17).

18. Appareil selon l'une des revendications 13 à 17, les dispositifs de contrainte (12) étant montés de manière à pouvoir tourner sur la tête de support (6) et la tête de support (6) comprenant un moteur (15) relié aux dispositifs de contrainte (12) afin de les faire tourner autour d'un axe auxiliaire respectif (Y-Y).
